# EUROPEAN PATENT APPLICATION

(11) **EP 4 852 535 A1**
(43) Date of publication of application: **09.12.2026**
(21) Application number: 25767205.5
(22) Date of filing: 21.02.2025
(51) Int. Cl.: H04W 52/02

(54) **COMMUNICATION METHOD AND APPARATUS**

(30) Priority: 07.03.2024 CN 202410263203
(71) Applicant: HUAWEI TECHNOLOGIES CO., LTD., Shenzhen, Guangdong 518129 (CN)
(72) Inventor: LIU, Heng, Shenzhen, Guangdong 518129 (CN); ZHENG, Lili, Shenzhen, Guangdong 518129 (CN); HAN, Feng, Shenzhen, Guangdong 518129 (CN); MA, Chuan, Shenzhen, Guangdong 518129 (CN)
(74) Representative: Huawei European IPR
(86) International application number: PCT/CN2025/078479
(87) International publication number: WO 2025/185465

(57) **Abstract**

A communication method and apparatus are provided. In the communication method, a terminal may receive first information from a network device, and learn from the first information that the terminal is to receive an SSB in a first secondary cell (that is, a secondary cell configured by the network device for the terminal). Accordingly, the terminal may receive the SSB in the first secondary cell based on the first information. In other words, the terminal receives the SSB in the first secondary cell only when the first information indicates that the terminal is to receive the SSB in the first secondary cell, thereby reducing power consumption of the terminal. Similarly, the network device does not need to continuously send the SSB in the first secondary cell. For example, the network device sends the SSB in the first secondary cell when or after sending the first information to the terminal. In this way, power consumption of the network device can be reduced.

## Description

This application claims priority to Chinese Patent Application No. 202410263203.3, filed with the China National Intellectual Property Administration on March 7, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To improve data transmission rates, a terminal may perform communication on a plurality of cells at the same time. The plurality of cells may include a primary cell (primary cell, PCell) and at least one secondary cell (secondary cell, SCell).

Generally, a secondary cell may send a synchronization signal block (synchronization signal and physical broadcast channel block, SSB) to facilitate synchronization, cell measurement, and the like for the terminal. However, continuously sending the SSB in the secondary cell may increase power consumption of the network device.

### SUMMARY

This application provides a communication method and apparatus to reduce power consumption of a network device.

According to a first aspect, a communication method is provided. The method may be performed by a terminal side, for example, may be performed by a terminal device, or may be performed by a module (for example, a processor, a chip, or a chip system) used in a terminal, or may be implemented by a logical node, a logical module, or software that can implement all or a part of functions of the terminal. For example, the method is applied to the terminal. In the method, the terminal may receive first information from a network device. Accordingly, the terminal may receive an SSB in a first secondary cell based on the first information. The first information indicates the terminal to receive the SSB in the first secondary cell, and the first secondary cell is a secondary cell configured by the network device for the terminal.

It can be learned that in the foregoing embodiment, the terminal may receive the first information from the network device, and learn from the first information that the terminal is to receive the SSB in the first secondary cell (that is, the secondary cell configured by the network device for the terminal). Accordingly, the terminal may receive the SSB in the first secondary cell based on the first information. In other words, the terminal receives the SSB in the first secondary cell only when the first information indicates that the terminal is to receive the SSB in the first secondary cell, thereby reducing power consumption of the terminal. Similarly, the network device does not need to continuously send the SSB in the first secondary cell. For example, the network device sends the SSB in the first secondary cell when or after sending the first information to the terminal. In this way, power consumption of the network device can be reduced.

In a possible implementation, the first information includes information about a first quantity of transmissions or information about a first transmission duration of the SSB. In other words, the terminal may receive the SSB in the first secondary cell based on the information about the first quantity of transmissions or the information about the first transmission duration of the SSB in the first information. That is, the terminal does not need to continuously receive the SSB in the first secondary cell, thereby reducing power consumption of the terminal. Similarly, the network device may also send the SSB in the first secondary cell based on the information about the first quantity of transmissions or the information about the first sending duration. That is, the network device does not need to continuously send the SSB in the first secondary cell, thereby reducing power consumption of the network device.

In a possible implementation, the method further includes: The terminal sends second information to the network device, where the second information is used to request sending of the SSB in the first secondary cell. The second information includes information about a second quantity of transmissions or information about a second transmission duration of the SSB; or the second information includes a cause value for the terminal to request sending of the SSB in the first secondary cell, where the cause value is used to determine the information about the second quantity of transmissions or the information about the second sending duration.

It can be learned that in the foregoing embodiment, the terminal may send, to the network device, the second information for requesting sending of the SSB in the first secondary cell. Therefore, the network device can learn about a quantity of transmissions (for example, the information about the second quantity of transmissions of the SSB) or a transmission duration (for example, the information about the second transmission duration of the SSB) of the SSB expected by the terminal, or the network device can learn about, based on the cause value for the terminal to request sending of the SSB in the first secondary cell, the quantity of transmissions (for example, the information about the second quantity of transmissions of the SSB) or the transmission duration

(for example, the information about the second transmission duration of the SSB) of the SSB expected by the terminal. This helps the network device learn about a requirement (for example, an energy saving requirement) of the terminal, and can better determine a quantity of transmissions or a transmission duration corresponding to the first secondary cell, to help the terminal and the network device reduce power consumption.

In a possible implementation, the second information further includes a second periodicity of the SSB or an index of the second periodicity; or the second information is associated with the second periodicity or an index of the second periodicity; or the cause value is further used to determine the second periodicity.

It can be learned that in the foregoing embodiment, the network device may further learn about a periodicity of the SSB (for example, the second periodicity of the SSB) expected by the terminal. This helps the network device learn about a requirement (for example, an energy saving requirement) of the terminal, and can better determine a periodicity corresponding to the first secondary cell, to help the terminal and the network device reduce power consumption.

In a possible implementation, the cause value indicates one or more of synchronization, layer 1 measurement, layer 3 measurement, activation of the first secondary cell, radio link monitoring, or beam failure detection.

In a possible implementation, the first information further includes a first periodicity of the SSB, and the first periodicity is associated with the second periodicity of the SSB. In other words, the first periodicity may be determined with reference to a periodicity of the SSB (for example, the second periodicity of the SSB) expected by the terminal. In this way, the requirement (for example, the energy saving requirement) of the terminal can be better met, to help the terminal and the network device reduce the power consumption.

In a possible implementation, the method further includes: The terminal receives third information from the network device, and accordingly, the terminal may stop receiving the SSB in the first secondary cell based on the third information. The third information indicates that the SSB is not broadcast in the first secondary cell.

It can be learned that in the foregoing embodiment, the terminal may obtain the third information indicating that the SSB is not broadcast in the first secondary cell. Accordingly, the terminal may stop receiving the SSB in the first secondary cell based on the third information. This avoids continuously receiving the SSB in the first secondary cell, and reduces power consumption of the terminal. Similarly, the network device does not need to continuously broadcast the SSB in the first secondary cell, thereby reducing power consumption of the network device.

In a possible implementation, the method further includes: The terminal receives fourth information from the network device, and accordingly, the terminal can receive the SSB in the first secondary cell based on a third periodicity. The fourth information indicates the terminal to receive the SSB in the first secondary cell based on the third periodicity of the SSB, and the third periodicity is different in length from the first periodicity of the SSB.

It can be learned that in the foregoing embodiment, the terminal may obtain the fourth information indicating to receive the SSB in the first secondary cell based on the third periodicity of the SSB. Accordingly, the terminal can receive the SSB in the first secondary cell based on the third periodicity. The third periodicity is different in length from the first periodicity of the SSB. In other words, the terminal may receive the SSB in the first secondary cell based on a periodicity of a larger length. This reduces a quantity of times the terminal receives the SSB in the first secondary cell, and reduces power consumption of the terminal. Similarly, the network device may send the SSB in the first secondary cell based on the longer periodicity. This can also reduce power consumption of the network device.

According to a second aspect, a method for transmitting an SSB in a secondary cell is provided. The method may be performed by a network side, for example, by a network device, or by a module (for example, a processor, a chip, or a chip system) used in the network device, or may be implemented by a logical node, a logical module, or software that can implement all or a part of functions of the network device. An example in which the method is applied to the network device is used. In the method, the network device may send first information to a terminal, and therefore, the network device may send the SSB in a first secondary cell. The first information indicates the terminal to receive the synchronization signal block SSB in the first secondary cell, and the first secondary cell is a secondary cell configured by the network device for the terminal.

It can be learned that in the foregoing embodiment, the network device may send the first information to the terminal, and therefore, the terminal can learn from the first information that the terminal is to receive the SSB in the first secondary cell (that is, the secondary cell configured by the network device for the terminal). Accordingly, the terminal may receive the SSB in the first secondary cell based on the first information. In other words, the terminal receives the SSB in the first secondary cell only when the first information indicates that the terminal is to receive the SSB in the first secondary cell, thereby reducing complexity of obtaining the SSB in the first secondary cell, and therefore can reduce power consumption of the terminal. Similarly, the network device does not need to continuously send the SSB in the first secondary cell. For example, the network device sends the SSB in the first secondary cell when or after sending the first information to the terminal. In this way, power consumption of the network device can be reduced.

In a possible implementation, the first information includes information about a first quantity of transmissions or information about a first transmission duration of the SSB. To be specific, the network device may indicate, to the terminal by using the first information, the information about the first quantity of transmissions or the information about the first transmission duration of the SSB. Accordingly, the terminal may receive the SSB in the first secondary cell based on the information about the first quantity of transmissions or the information about the first transmission duration of the SSB. That is, the terminal does not need to continuously receive the SSB in the first secondary cell, thereby reducing power consumption of the terminal. Similarly, the network device may also send the SSB in the first secondary cell based on the information about the first quantity of transmissions or the information about the first sending duration. That is, the network device does not need to continuously send the SSB in the first secondary cell, thereby reducing power consumption of the network device.

In a possible implementation, the method further includes: The network device receives second information from the terminal, where the second information is used to request sending the SSB in the first secondary cell. The second information includes information about a second quantity of transmissions or information about a second transmission duration of the SSB; or the second information includes a cause value for the terminal to request sending of the SSB in the first secondary cell, where the cause value is used to determine the information about the second quantity of transmissions or the information about the second sending duration.

It can be learned that in the foregoing embodiment, the network device may obtain, from the terminal, the second information for requesting sending of the SSB in the first secondary cell. Therefore, the network device can learn about a quantity of transmissions (for example, the information about the second quantity of transmissions of the SSB) or a transmission duration (for example, the information about the second transmission duration of the SSB) of the SSB expected by the terminal, or the network device can learn about, based on the cause value for the terminal to request sending of the SSB in the first secondary cell, the quantity of transmissions (for example, the information about the second quantity of transmissions of the SSB) or the transmission duration (for example, the information about the second transmission duration of the SSB) of the SSB expected by the terminal. This helps the network device learn about a requirement (for example, an energy saving requirement) of the terminal, and can better determine a quantity of transmissions or a transmission duration corresponding to the first secondary cell, to help the terminal and the network device reduce power consumption.

In a possible implementation, the second information further includes a second periodicity of the SSB or an index of the second periodicity; or the second information is associated with the second periodicity or an index of the second periodicity; or the cause value is further used to determine the second periodicity.

It can be learned that in the foregoing embodiment, the network device may further learn about a periodicity of the SSB (for example, the second periodicity of the SSB) expected by the terminal. This helps the network device learn about a requirement (for example, an energy saving requirement) of the terminal, and can better determine a periodicity corresponding to the first secondary cell, to help the terminal and the network device reduce power consumption.

In a possible implementation, the cause value indicates one or more of synchronization, layer 1 measurement, layer 3 measurement, activation of the first secondary cell, radio link monitoring, or beam failure detection.

In a possible implementation, the first information further includes a first periodicity of the SSB, and the first periodicity is associated with the second periodicity of the SSB. In other words, the first periodicity may be determined with reference to a periodicity of the SSB (for example, the second periodicity of the SSB) expected by the terminal. In this way, the requirement (for example, the energy saving requirement) of the terminal can be better met, to help the terminal and the network device reduce the power consumption.

In a possible implementation, that the network device sends the first information to the terminal includes: The network device sends the first information to the terminal before a first time point. The first time point is a start time point for sending the SSB in the first secondary cell.

It can be learned that in the foregoing embodiment, the network device may send the first information to the terminal before the start time point (that is, the first time point) for sending the SSB in the first secondary cell. Accordingly, the terminal device can receive the first information at a corresponding time point, thereby avoiding that the terminal device misses receiving the SSB in the first secondary cell because the terminal device receives the first information too late.

In a possible implementation, the method further includes: The network device sends third information to the terminal, where the third information indicates that the SSB is not broadcast in the first secondary cell.

It can be learned that in the foregoing embodiment, the network device may indicate, by using the third information, the terminal not to broadcast the SSB in the first secondary cell. Accordingly, the terminal may stop receiving the SSB in the first secondary cell based on the third information. This avoids continuously receiving the SSB in the first secondary cell, and reduces power consumption of the terminal. Similarly, the network device does not need to continuously broadcast the SSB in the first secondary cell, thereby reducing power consumption of the network device.

In a possible implementation, the method further includes: The network device sends fourth information to the terminal, where the fourth information indicates the terminal to receive the SSB in the first secondary cell based on a third periodicity of the SSB, and the third periodicity is different in length from the first periodicity of the SSB.

It can be learned that in the foregoing embodiment, the network device may indicate, by using the third information, the terminal to receive the SSB in the first secondary cell based on the third periodicity of the SSB. Accordingly, the terminal can receive the SSB in the first secondary cell based on the third periodicity. The third periodicity is different in length from the first periodicity of the SSB. In other words, the terminal may receive the SSB in the first secondary cell based on a periodicity of a larger length. This reduces a quantity of times the terminal receives the SSB in the first secondary cell, and reduces power consumption of the terminal. Similarly, the network device may send the SSB in the first secondary cell based on the longer periodicity. This can also reduce power consumption of the network device.

According to a third aspect, a communication apparatus is provided, including a unit or a module configured to implement the method according to any one of the first aspect and the second aspect. The communication apparatus may be a terminal, or may be a module (for example, a processor, a chip, or a chip system) of the terminal, or may be a logical node, a logical module, or software that can implement all or some functions of the terminal.

According to a fourth aspect, a communication apparatus is provided. The communication apparatus includes at least one processor. The at least one processor is configured to perform the method according to any one of the first aspect and the second aspect. The communication apparatus may be a terminal, or may be a module (for example, a processor, a chip, or a chip system) of the terminal, or may be a logical node, a logical module, or software that can implement all or some functions of the terminal. The at least one processor may execute a computer program or instructions in a memory, to cause the above-described method to be performed. The memory may be included in the communication apparatus or located outside the communication apparatus. In addition, the communication apparatus may further include an interface.

According to a fifth aspect, a computer-readable storage medium is provided. The computer-readable storage medium stores computer instructions. When the computer instructions are executed, a computer is caused to perform the method according to any one of the first aspect and the second aspect.

According to a sixth aspect, a computer program product is provided. The computer program product includes computer program code. When the computer program code is run by a computer, the computer is caused to perform the method according to any one of the first aspect and the second aspect.

According to a seventh aspect, a chip is provided. The chip includes at least one processor and an interface. The processor is configured to read and execute instructions stored in a memory. When the instructions are run, the chip is caused to perform the method according to any one of the first aspect and the second aspect.

According to an eighth aspect, a communication system is provided, including a terminal configured to perform the method according to any one of the implementations of the first aspect and a network device configured to perform the method according to any one of the implementations of the second aspect.

### BRIEF DESCRIPTION OF DRAWINGS

FIG. 1 shows a basic architecture of a communication system according to an embodiment of this application;
FIG. 2 is a diagram of a network device in an ORAN system;
FIG. 3A to FIG. 3C are a diagram of carrier aggregation;
FIG. 4A and FIG. 4B are a diagram of co-site deployment of a primary cell and a secondary cell and non-co-site deployment of a primary cell and a secondary cell;
FIG. 5 is a schematic flowchart of a communication method according to an embodiment of this application;
FIG. 6 is a diagram of a frame structure of a DL MAC CE;
FIG. 7A to FIG. 7D are a diagram in which a terminal receives an SSB in a first secondary cell according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more unless otherwise specified. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In the following specific implementations, the objectives, technical solutions, and beneficial effects of this application are further described in detail. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

It should be understood that the technical solutions in embodiments of this application may be applied to a long term evolution (long term evolution, LTE) architecture, a 5th generation mobile communication technology (5th generation mobile network, 5G), a wireless local area network (wireless local area network, WLAN) system, a vehicle to everything (vehicle to everything, V2X) communication system, LTE-vehicle (LTE-vehicle, LTE-V), vehicle to vehicle (vehicle to vehicle, V2V), internet of vehicles, machine type communication (machine type communication, MTC), and the like. The technical solutions in embodiments of this application may also be applied to another future communication system, for example, a 6G communication system. In the future communication system, the function may remain the same, but the name may change.

The following describes a basic architecture of a communication system provided in embodiments of this application. The communication system provided in this application may include one or more network devices and one or more terminals.

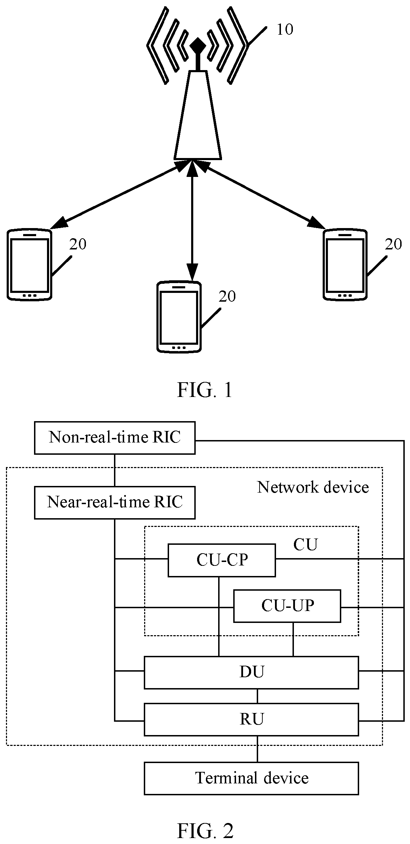

The following uses a system architecture shown in FIG. 1 as an example for description. As shown in FIG. 1, the communication system includes a network device 10 and one or more terminals (for example, a terminal 20 in FIG. 1) communicating with the network device 10.

It should be noted that quantities of network devices and terminals in FIG. 1 are merely examples, and should not be considered as a specific limitation on this application. The following further describes in detail devices in the system architecture.

### 1. Terminal

The terminal is a user-side entity configured to receive a signal, or send a signal, or receive a signal and send a signal. The terminal is configured to provide one or both of a voice service and a data connectivity service for users. The terminal may be a device that has a wireless transceiver function and that may cooperate with a network device to provide a communication service for users. Specifically, the terminal device may refer to user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a compute device or another processing device connected to a wireless modem, an in-vehicle device, a wearable device (also referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self-driving (self-driving), a wireless terminal in smart grid (smart grid), a wireless terminal in transportation safety (transportation safety), a wireless terminal in smart city (smart city), a wireless terminal in smart home (smart home), or the like. The terminal may alternatively be a terminal in a 5G system, or a terminal in a next generation communication system. This is not limited in embodiments of this application.

A device form of the terminal is not limited in embodiments of this application. An apparatus for implementing a function of a terminal may be a terminal, or may be an apparatus, for example, a chip system, that supports the terminal in implementing the function. The apparatus may be mounted in the terminal or used together with the terminal. In embodiments of this application, the chip system may include a chip, or may include a chip and another discrete component.

### 2. Network device

The network device is a network-side entity configured to send a signal, or receive a signal, or send a signal and receive a signal. The network device may be an apparatus deployed in a radio access network (radio access network, RAN) to provide a wireless communication function for the terminal.

In a possible scenario, the network device may be a device having a base station function, for example, an evolved NodeB (evolved NodeB, eNodeB), a transmission reception point (transmission reception point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial network device in a non-terrestrial network (non-terrestrial network, NTN), that is, a device, a satellite, or the like that may be deployed on a high-altitude platform. The network device may be a transmission reception point (transmission reception point, TRP), a base station, or control nodes in various forms, for example, a network controller or a wireless controller. Specifically, the network device may be macro base stations in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU) and a radio frequency unit (remote radio unit, RRU) in a distributed base station scenario, a transmission reception point (transmitting and receiving point, TRP), a transmitting point (transmitting point, TP), a mobile switching center, or the like; or may be an antenna panel of a base station. The control node may be connected to a plurality of base stations, and configure resources for a plurality of terminals covered by the plurality of base stations. In systems using different radio access technologies, names of devices having a base station function may be different. For example, the device may be a gNB in 5G, a network side device in a network after 5G, a network device in a future evolved public land mobile (communication) network (public land mobile network, PLMN), or a device that has a function of a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

All or some functions of the network device in this application may alternatively be implemented by a software function running on hardware, or may be implemented by a virtualization function instantiated on a platform (for example, a cloud platform). The network device in this application may alternatively be a logical node, a logical module, or software that can implement all or some functions of the network device.

In another possible scenario, a plurality of network devices collaborate to assist a terminal in implementing radio access, and different network devices respectively implement a part of functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in an access network RAN, or the CU may be classified as a network device in a core network (core network, CN). This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

Optionally, in the ORAN system, the network device may further include a RAN intelligent controller (RAN intelligent controller, RIC), including a near-real-time RIC (near-real time RIC, near-RT RIC), a non-real-time RIC (non-real-time RIC, Non-RT RIC), and/or the like. In this case, the network device in the ORAN system may be shown in FIG. 2. The near-real-time RIC or the non-real-time RIC may be used for model training and inference, for example, training an artificial intelligence (artificial intelligence, AI) model, and performing inference by using the AI model. The near-real-time RIC or the non-real-time RIC may obtain corresponding information from the network device (for example, at least one of the CU, the CU-CP, the CU-UP, the DU, and the RU) and/or the terminal, to be used as training data or inference data. Optionally, the near-real-time RIC or the non-real-time RIC may submit an inference result to the network device and/or the terminal. Optionally, the inference result may be exchanged between the CU and the DU and/or between the DU and the RU. For example, the near-real-time RIC or non-real-time RIC submits the inference result to the DU, and the DU sends the inference result to the RU, to implement near-real-time intelligent management of the network device. Any one of the CU (or the CU-CP and the CU-UP), the DU, the RU, and the RIC in this application may be implemented by using a software module, a hardware module, or a combination of the software module and the hardware module.

A form of the network device is not limited in embodiments of this application. An apparatus for implementing a function of the network device may be a network device, or may be an apparatus, for example, a chip system, that supports the network device in implementing the function. The apparatus may be installed in the network device or used together with the network device.

To facilitate understanding of content of the solutions, the following further explains and describes some terms in embodiments of this application, so as to facilitate understanding by a person skilled in the art. This part is merely for ease of understanding, and cannot be considered as a specific limitation on this application.

### 1. Reference signal

The reference signal may be used for one or more of synchronization (including time synchronization and/or frequency synchronization), performing layer 1 (layer 1, L1) measurement, performing layer 3 (layer 3, L3) measurement, activation of a secondary cell, radio link monitoring (radio link monitoring, RLM), beam failure detection (beam failure detection, BFD), or the like. A layer 1 may be a protocol layer having a function similar to providing a physical resource for data transmission, for example, a physical (physical, PHY) layer. This is not limited in this application. A layer 3 may be a protocol layer having a function similar to a radio resource management function, for example, a radio resource control (radio resource control, RRC) layer. This is not limited in this application. Optionally, a process of activating the secondary cell may include synchronization. In other words, the secondary cell is activated after the network device is successfully synchronized with the terminal.

The reference signal may be an SSB, a sounding reference signal (sounding reference signal, SRS), a tracking reference signal (tracking reference signal, TRS), a phase tracking reference signal (phase tracking reference signal, PTRS), a channel state information reference signal (channel state information reference signal, CSI-RS), a demodulation reference signal (demodulation reference signal, DMRS), a positioning reference signal (positioning reference signal, PRS), or the like. This is not limited in this application. An example in which the reference signal is an SSB is used below for description, and this should not be considered as a limitation on this application.

Generally, the network device may configure an SSB resource, so that the terminal receives the SSB on the SSB resource. The SSB resource may include, for example, one or more of a time-domain resource, a frequency-domain resource, a code-domain resource, a space-domain resource, and a power-domain resource.

The time-domain resource includes at least one of a periodicity of the SSB, a slot-level offset in a periodicity, a symbol index in a slot, a time-domain position of the SSB in a half frame, and the like.

In this application, a periodicity of the SSB may be indicated by using an ssb-periodicityServingCell information element. For details, refer to the following content:

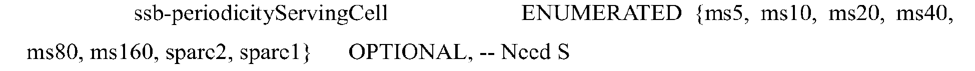

"ms5" represents 5 milliseconds (ms), "ms10" represents 10 ms, and so on. Details are not described herein again.

The time-domain position of the SSB in the half frame is configured by using a bitmap. The bitmap may be referred to as an SSB burst position (ssb-PositionsInBurst). For details, refer to the following content:

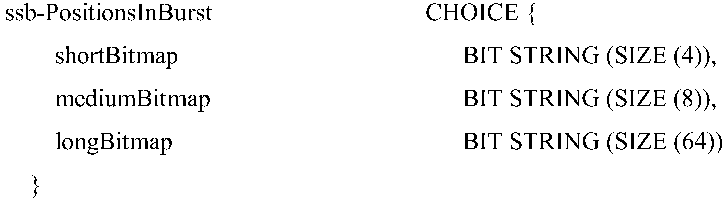

The bitmap may be four bits, eight bits, or 64 bits. A 1^{st} bit (that is, a leftmost bit or a most significant bit (most significant bit, MSB)) in the bitmap corresponds to an SSB index (index) 0, a 2^{nd} bit corresponds to an SSB index 1, and so on. When a bit in the bitmap is set to 0, it indicates that a corresponding SSB is not transmitted, that is, the SSB is not sent; or when the bit is set to 1, it indicates that the corresponding SSB is transmitted, that is, the SSB is sent; and vice versa.

In a possible implementation, different SSBs may correspond to different sending directions. In other words, the bitmap may further indicate whether an SSB in a sending direction is transmitted. For example, when a bit in the bitmap is set to 0, it indicates that no SSB is transmitted in a corresponding sending direction; or when a bit in the bitmap is set to 1, it indicates that an SSB is transmitted in a corresponding sending direction.

The frequency-domain resource includes at least one of a frequency position of the SSB, a subcarrier spacing of the SSB, a bandwidth, a start resource block (resource block, RB), a frequency hopping configuration, a frequency-domain comb configuration, and the like.

The code-domain resource includes at least one of a sequence of the SSBs, a cyclic shift of the SSB, and the like.

The power-domain resource includes at least one of power of the SSB, a power range, a power offset, a power threshold, and the like. The power of the SSB may be understood as transmit power of the SSB, and may be more specifically understood as transmit power of a secondary synchronization signal (secondary synchronization signal, SSS) in the SSB, or the like. The power range may include an interval determined by a maximum power value and a minimum power value. The power range may further include a boundary point or may not include a boundary point, for example, the maximum power value and/or the minimum power value.

### 2. Carrier (component carrier, CC)

The carrier is a contiguous frequency range that complies with a system specification. The frequency range may be determined based on a center frequency (denoted as a carrier frequency) of the carrier and a bandwidth of the carrier.

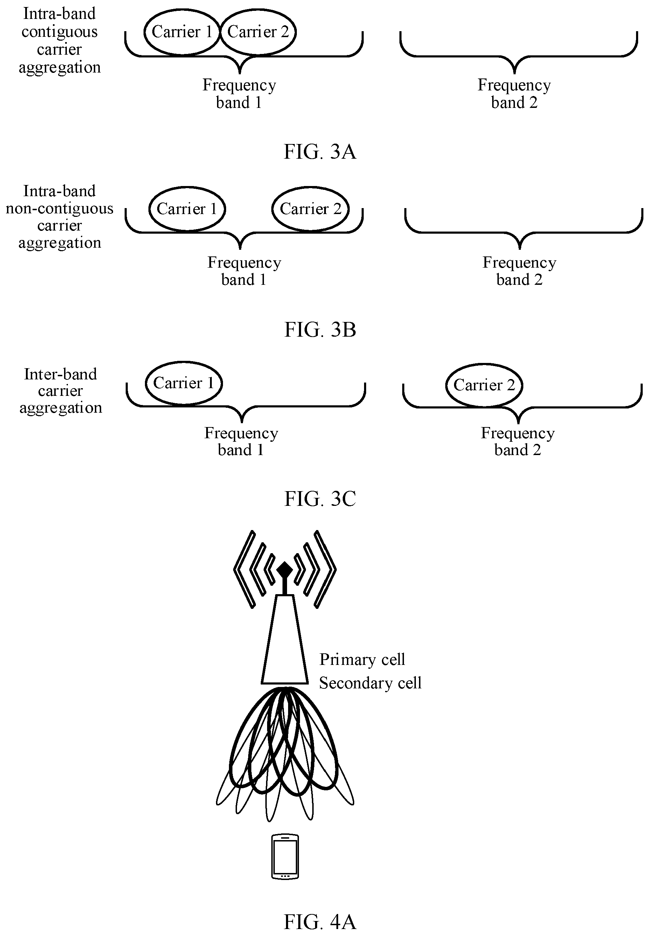

To improve a data transmission rate and reduce a delay, a carrier aggregation (carrier aggregation, CA) technology is proposed. Carrier aggregation means aggregating a plurality of contiguous or non-contiguous carriers into a larger bandwidth. Generally, based on frequency bands on which aggregated carriers are located, carrier aggregation may be further classified into intra-band carrier aggregation (intra-band CA) and inter-band carrier aggregation (inter-band CA). Intra-band carrier aggregation may be classified into intra-band contiguous carrier aggregation and intra-band non-contiguous carrier aggregation. As shown in FIG. 3A, aggregation of contiguous carrier 1 and carrier 2 on a frequency band 1 may be referred to as intra-band contiguous carrier aggregation. As shown in FIG. 3B, aggregation of non-contiguous carrier 1 and carrier 2 on a frequency band 1 may be referred to as intra-band non-contiguous carrier aggregation. As shown in FIG. 3C, aggregation of a carrier 1 on a frequency band 1 and a carrier 2 on a frequency band 2 may be referred to as inter-band carrier aggregation.

In the CA technology, the terminal may perform communication in a plurality of cells at the same time, to support high-rate data transmission. The plurality of cells may include a primary carrier cell (primary carrier cell, PCell) and at least one secondary carrier cell (secondary carrier cell, SCell). The primary carrier cell may be briefly referred to as a primary cell, and the secondary carrier cell may be briefly referred to as a secondary cell. For ease of description, the following uses the primary cell and the secondary cell as an example for description, and this should not be considered as a limitation on this application.

The primary cell is a cell where the terminal and the network device perform initial connection establishment (connection establishment), or a cell where the terminal performs radio resource control (radio resource control, RRC) connection reestablishment, or a primary cell executing a handover (handover) process. The primary cell is responsible for RRC communication between the terminals. Generally, in the CA technology, the primary cell may operate on a primary component carrier (primary component carrier, PCC).

Compared with the primary cell, the secondary cell may provide additional radio resources. Generally, in the CA technology, the secondary cell may operate on a secondary component carrier (secondary component carrier, SCC).

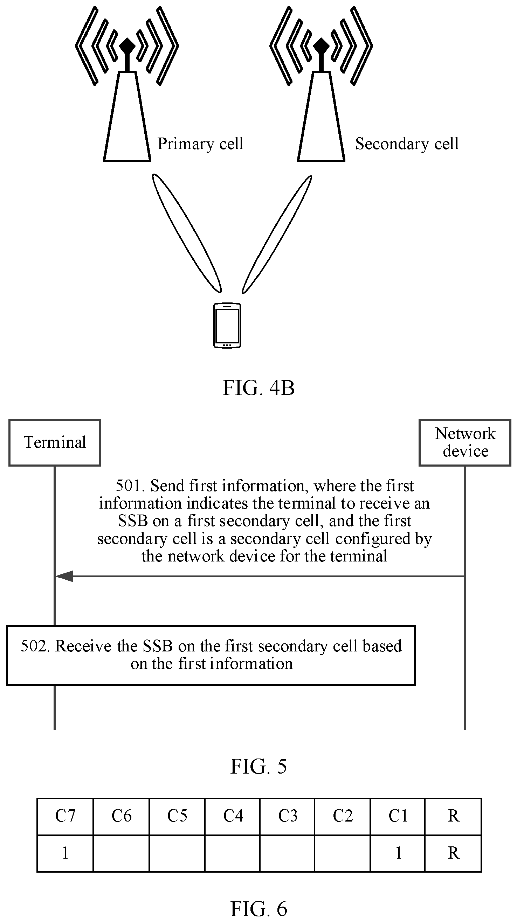

Optionally, the primary cell and the secondary cell may be co-sited or non-co-sited. For details, refer to FIG. 4A and FIG. 4B, respectively. Co-site deployment may be understood as that two carriers are deployed at a same site, for example, a same network device, and the two carriers are carriers deployed in a co-site manner. The two carriers may respectively belong to the primary cell and the secondary cell. Non-co-site deployment may be understood as deployment at different sites, for example, a carrier of a network device (referred to as a master network device) belongs to the primary cell, a carrier of another network device (referred to as a secondary network device) belongs to the secondary cell, and the two network devices are located at different sites.

### 3. Dual connectivity (dual connectivity, DC)

To improve a data transmission rate and reliability, the terminal may be simultaneously connected to a plurality of network devices. The plurality of network devices include one master network device and at least one secondary network device. For example, in a dual connectivity scenario, the terminal may be connected to one master network device and one secondary network device. The master network device may also be referred to as a master node (master node, MN), and the secondary network device may also be referred to as a secondary node (secondary node, SN). Names of the master network device and the secondary network device are not limited in this application. For ease of description, the following uses the master network device and the secondary network device as an example for description, and this should not be considered as a limitation on this application.

In a possible implementation, DC may include evolved universal terrestrial radio access and new radio dual connectivity (E-UTRA-new radio dual connectivity, EN-DC), next generation radio access network evolved universal terrestrial radio access and new radio dual connectivity (NG-RAN E-UTRA-NR dual connectivity, NGEN-DC), new radio and evolved universal terrestrial radio access dual connectivity (NR-E-UTRA dual connectivity, NE-DC), new radio and new radio dual connectivity (NR-NR dual connectivity, NR-DC), or the like. In EN-DC, that is, LTE-NR DC, the master network device is an LTE base station connected to a 4G core network, and the secondary network device is an NR base station. In NGEN-DC, the master network device is an LTE base station connected to a 5G core network, and the secondary network device is an NR base station. In NE-DC, that is, NR-LTE DC, the master network device is an NR base station connected to a 5G core network, and the secondary network device is an LTE base station. In NR-DC, that is, NR-NR DC, both the master network device and the secondary network device are NR base stations connected to a 5G core network. There are merely some possible examples, and standards of the master network device and the secondary network device are not limited in this application. For example, at least one of the master network device and the secondary network device may be a base station of another future communication system, for example, a 6G base station.

Optionally, the master network device and the secondary network device may be co-sited, that is, the master network device and the secondary network device are a same network device. Alternatively, the master network device and the secondary network device may be non-co-sited, that is, the master network device and the secondary network device are different network devices. A manner of deploying the master network device and the secondary network device is not limited in this application.

In a possible implementation, one or more cells that can be provided by the master network device for the terminal form a master cell group (master cell group, MCG). For example, the master cell group includes a primary cell and zero or at least one secondary cell.

In a possible implementation, one or more cells that can be provided by the secondary network device for the terminal form a secondary cell group (secondary cell group, SCG). For example, the secondary cell group includes a primary secondary cell (primary secondary cell, PSCell) and zero or at least one secondary cell. The primary secondary cell is a cell where the terminal initiates a random access procedure on the secondary network device, or a cell where the terminal skips a random access procedure during a change of the secondary network device to initiate data transmission, or a cell of a network device to which random access is initiated during a synchronous reconfiguration process.

Generally, the secondary cell may send an SSB, to facilitate synchronization, cell measurement, and the like by the terminal. However, continuously sending the SSB in the secondary cell may increase power consumption of the network device. In view of this, this application provides an embodiment shown in FIG. 5, to resolve the problem.

Embodiments of this application are described below in detail. FIG. 5 shows a communication method according to an embodiment of this application. The communication method includes but is not limited to the following steps.

501. A network device sends first information to a terminal, where the first information indicates the terminal to receive an SSB in a first secondary cell, and the first secondary cell is a secondary cell configured by the network device for the terminal.

Correspondingly, the terminal receives the first information from the network device.

In a possible implementation, the first information may be carried in a downlink media access control-control element (downlink media access control-control element, DL MAC CE), downlink control information (downlink control information, DCI), an RRC message, or the like. The DCI may be carried in a physical downlink control channel (physical downlink control channel, PDCCH). In other words, it may be described as that the first information is carried in the PDCCH. A message carried in a physical downlink shared channel (physical downlink shared channel, PDSCH) may be an RRC message. In other words, it may be described as that the first information is carried in the PDSCH. It should be understood that, in the following descriptions, information being carried in the DCI may be replaced with that the information is carried in the PDCCH, and this should not be considered as a limitation on this application. Similarly, in the following descriptions, information being carried in the PDSCH may be replaced with that the information is carried in the RRC message, and this should not be considered as a limitation on this application.

It should be noted that, in this application, the PDCCH and the PDSCH are merely used as examples of a downlink control channel and a downlink data channel, respectively. In different systems and different scenarios, the downlink data channel and the downlink control channel may have different names. This is not limited in this embodiment of this application.

502. The terminal receives the SSB in the first secondary cell based on the first information.

Correspondingly, the network device sends the SSB in the first secondary cell.

The following describes specific implementations of step 501 and step 502.

The network device may configure (which may also be understood as adding) one or more secondary cells (including the first secondary cell) for the terminal. Therefore, the network device may indicate the terminal to receive the SSB in the one or more secondary cells (including the first secondary cell). In this case, the first information may be implemented in the following manners.
1. The first information is a single piece of information, and different values of the first information or different values of some bits in the first information are used to indicate the terminal to receive the SSB in the one or more secondary cells.

For example, one bit in the first information may be used to indicate the terminal to receive the SSB in the one or more secondary cells.

In an example, if a bit state is '1', it indicates the terminal to receive the SSB in the first secondary cell; or if the bit state is '0', it indicates the terminal to receive the SSB in a second secondary cell; and vice versa.

In another example, if a bit state is '1', it indicates the terminal to receive the SSB in the first secondary cell; or if the bit state is '0', it indicates the terminal not to receive the SSB in the first secondary cell; and vice versa.

2. The first information is one of a plurality of pieces of first information. It should be understood as that the terminal may receive the plurality of pieces of first information, that is, it may be described as that the terminal receives the plurality of pieces of first information. In this case, it may be understood as that one of the plurality of pieces of first information indicates the terminal to receive the SSB in the first secondary cell, and another piece of first information indicates the terminal to receive the SSB in the second secondary cell, or the like.

It should be noted that, in the foregoing manner 1 or manner 2, two secondary cells (for example, the first secondary cell and the second secondary cell) are used as an example to describe a process in which the network device indicates on which secondary cells the terminal is to receive the SSB. This should not be considered as a limitation on this application. For ease of description, an example in which the first information indicates the terminal to receive the SSB in the first secondary cell is used below for description. This should not be considered as a limitation on this application.

In a possible implementation, to help the terminal learn about specific secondary cells on which the SSB is to be received, the first information in manner 1 or manner 2 may include identification information of the first secondary cell.

It should be noted that identification information of a secondary cell mentioned in this application may identify the secondary cell. Optionally, the identification information of the secondary cell may be a physical cell identifier (physical cell identifier, PCI), a cell global identity (cell global identity, CGI), or the like. The identification information of the secondary cell may alternatively have another name, for example, an identifier of the secondary cell, a serial number of the secondary cell, or an index of the secondary cell. This is not limited in this application.

In a possible implementation, the network device may further indicate, to the terminal, at least one of a periodicity, a quantity of transmissions, sending duration, a sending direction, or the like of the SSB. For example, the first information further includes at least one of the following: a first periodicity (or an index of the first periodicity) of the SSB corresponding to the first secondary cell, information about a first quantity of transmissions of the SSB, information about a first transmission duration of the SSB, and a first sending direction of the SSB.

The first periodicity may be indicated by using an ssb-periodicityServingCell information element corresponding to the first secondary cell in the first information. Optionally, there may be one or more first periodicities. Lengths of the plurality of first periodicities may be partially the same, completely the same, or completely different.

Information about a quantity of transmissions (for example, the first quantity of transmissions) of the SSB mentioned in this application may be understood as a quantity of transmissions of the SSB in a corresponding periodicity. For example, the information about the first quantity of transmissions of the SSB may be a quantity of first periodicities. For example, if the information about the first quantity of transmissions of the SSB indicates that the quantity of transmissions is 2, it indicates that the quantity of first periodicities is 2.

Information about a transmission duration (for example, the first sending duration) of the SSB mentioned in this application may be understood as a transmission duration of the SSB in a corresponding periodicity. For example, the information about the first transmission duration of the SSB may be a transmission duration of the SSB in the first periodicity, that is, duration from sending the SSB in the first secondary cell to stopping sending the SSB in the first secondary cell.

Optionally, a transmission duration (for example, the first sending duration) of the SSB mentioned in this application may be understood as duration of a sending timer of the SSB. When the information about the transmission duration (for example, the first sending duration) may be a transmission duration of the SSB in each periodicity (for example, the first periodicity), there may be a plurality of sending timers. For example, there are three first periodicities, and there are three sending timers.

Optionally, the first sending direction includes a sending direction of an SSB corresponding to a bit with a value of 1 in ssb-PositionsInBurst corresponding to the first secondary cell in the first information. In a possible implementation, the first sending direction may be determined based on a coverage area in which the terminal is located. The coverage area is an area covered by a beam of the network device.

The following describes several implementations of step 501. Specifically:
1. The network device sends the first information to the terminal based on second information (the second information is used to request sending of the SSB in the first secondary cell) from the terminal.

For example, when receiving the second information, the network device sends the first information to the terminal.

For example, after receiving the second information, the network device sends the first information to the terminal based on a time unit for the second information. For example, the network device sends the first information to the terminal in the time unit, a next time unit of the time unit, or a system frame to which the time unit belongs. A time unit mentioned in this application may be a subframe, a slot, a mini-slot, a symbol, or another time-domain unit. This is not limited herein.

It should be understood that the network device may configure one or more secondary cells (including the first secondary cell) for the terminal. Accordingly, the terminal may request to receive the SSB in the one or more secondary cells (including the first secondary cell). In this case, the second information may be implemented in the following manners.

A. The second information is a single piece of information, and different values of the second information or different values of some bits in the second information may be used to request sending of the SSB in the one or more secondary cells.

For example, one bit in the second information may be used to request sending of the SSB in the one or more secondary cells. Specifically:

In an example, if a bit state is '1', it is requested to send the SSB in the first secondary cell; or if the bit state is '0', it is requested to send the SSB in the second secondary cell; and vice versa.

In another example, if a bit state is '1', it is requested to send the SSB in the first secondary cell; or if the bit state is '0', it is requested not to send the SSB in the first secondary cell; and vice versa.

B. The second information is one of a plurality of pieces of second information. It should be understood as that the terminal may receive the plurality of pieces of second information, that is, it may be described as that the terminal receives the plurality of pieces of second information. In this case, it may be understood as that one of the plurality of pieces of second information is used to request sending of the SSB in the first secondary cell, and another piece of the plurality of pieces of second information is used to request sending of the SSB in the second secondary cell, or the like.

It should be noted that, in the foregoing manner A or manner B, two secondary cells (for example, the first secondary cell and the second secondary cell) are used as an example to describe a process in which the terminal requests sending of the SSB on which secondary cells. This should not be considered as a limitation on this application. For ease of description, an example in which the second information is used to request sending of the SSB in the first secondary cell is used below for description. This should not be considered as a limitation on this application.

In a possible implementation, the second information in manner A or manner B may be carried in a wake-up signal (wake-up signal, WUS), uplink control information (uplink control information, UCI), an uplink media access control-control element (uplink media access control-control element, UL MAC CE), an RRC message, or the like. The UCI may be carried in a physical uplink control channel (physical uplink control channel, PUCCH). In other words, it may be described as that the second information is carried in the PUCCH. A message carrying a physical uplink shared channel (physical uplink shared channel, PUSCH) may be an RRC message. In other words, it may be described as that the second information is carried in the PUSCH. It should be understood that, in the following descriptions, information being carried in the UCI may be replaced with that the information is carried in the PUCCH, and this should not be considered as a limitation on this application. Similarly, in the following descriptions, information being carried in the PUSCH may be replaced with that the information is carried in the RRC message, and this should not be considered as a limitation on this application.

It should be noted that, in this application, the PUCCH and the PUSCH are merely used as examples of an uplink control channel and an uplink data channel, respectively. In different systems and different scenarios, the uplink data channel and the uplink control channel may have different names. This is not limited in this embodiment of this application.

In a possible implementation, to help the network device learn about specific secondary cells on which the terminal requests sending of the SSB, the second information in manner A or manner B may include identification information of the first secondary cell.

In a possible implementation, the terminal may further indicate, to the network device, at least one of a periodicity, a sending direction, a quantity of transmissions, sending duration, or the like of the SSB expected by the terminal.

For example, the second information includes at least one of the following: a second periodicity (or an index of the second periodicity) of the SSB corresponding to the first secondary cell, information about a second quantity of transmissions of the SSB, information about a second transmission duration of the SSB, and a second sending direction of the SSB. The second periodicity may be indicated by using an ssb-periodicityServingCell information element corresponding to the first secondary cell in the second information. Optionally, there may be one or more second periodicities. Lengths of the plurality of second periodicities may be partially the same, completely the same, or completely different. The second sending direction includes a sending direction of an SSB corresponding to a bit with a value of 1 in ssb-PositionsInBurst corresponding to the first secondary cell in the second information.

For example, the second information includes a cause value for the terminal to request sending of the SSB in the first secondary cell, and the cause value is used to determine at least one of the following: the second periodicity (or the index of the second periodicity) of the SSB corresponding to the first secondary cell, the information about the second quantity of transmissions of the SSB, the information about the second transmission duration of the SSB, and the second sending direction of the SSB. Optionally, the cause value indicates one or more of synchronization, layer 1 measurement, layer 3 measurement, activation of the first secondary cell, radio link monitoring, or beam failure detection. Different cause values may indicate at least one of the following: different periodicities, different quantities of transmissions, different pieces of sending duration, different sending directions, or the like. For example, a second periodicity determined based on synchronization (that is, the cause value indicates synchronization) is different in length from a second periodicity determined based on layer 1 measurement (that is, the cause value indicates layer 1 measurement). For example, the former length is greater than or less than the latter length. For example, information about a second transmission duration determined based on synchronization (that is, the cause value indicates synchronization) is different from information about second a transmission duration determined based on layer 1 measurement (that is, the cause value indicates layer 1 measurement). For example, the former duration is greater than or less than the latter duration. The rest may be deduced by analogy, which is not listed one by one herein.

For example, the second information may have an association relationship with at least one of the second periodicity (or the index of the second periodicity) of the SSB corresponding to the first secondary cell, the information about the second quantity of transmissions of the SSB, the information about the second transmission duration of the SSB, the second sending direction of the SSB, and the like. For example, the second information is carried in the WUS, and the WUS may have an association relationship with at least one of the second periodicity (or the index of the second periodicity), the information about the second quantity of transmissions, the information about the second sending duration, the second sending direction, and the like. In other words, after receiving the WUS, the network device may learn about, based on the association relationship, at least one of the second periodicity (or the index of the second periodicity), the information about the second quantity of transmissions, the information about the second sending duration, the second sending direction, and the like. The association relationship may be predefined or preconfigured, or the association relationship may be indicated by the network device to the terminal.

Optionally, one WUS may have an association relationship with at least one of the following: periodicities (or indexes of the periodicities), sending directions, information about quantities of transmissions, information about sending duration, and the like of SSBs corresponding to one or more secondary cells (including the first secondary cell). This is not limited in this application.

It should be noted that the foregoing is merely some examples of "the terminal indicates, to the network device, at least one of the periodicity, the quantity of transmissions, the sending duration, the sending direction, or the like of the SSB expected by the terminal". These examples may be further combined to implement "the terminal indicates, to the network device, at least one of the periodicity, the quantity of transmissions, the sending duration, the sending direction, or the like of the SSB expected by the terminal". For example, the second information includes the second periodicity (or the index of the second periodicity) of the SSB corresponding to the first secondary cell and the cause value for the terminal to request sending of the SSB in the first secondary cell. The cause value is used to determine the information about the second quantity of transmissions of the SSB, the information about the second transmission duration of the SSB, and the second sending direction of the SSB. Examples are not listed herein.

In a possible implementation, the network device may further send WUS configuration information to the terminal, including at least one of a time-frequency resource of the WUS, a root sequence index value of the WUS, and the like. In this way, the terminal may generate the WUS based on the root sequence index value, and send the WUS to the network device on the time-frequency resource of the WUS. For example, when the terminal indicates, to the network device, at least one of the periodicity, the quantity of transmissions, the sending duration, the sending direction, or the like of the SSB expected by the terminal, the terminal may generate the WUS based on the root sequence index value, and send the WUS to the network device on the time-frequency resource of the WUS.

When the terminal indicates, to the network device, at least one of the periodicity, the quantity of transmissions, the sending duration, the sending direction, or the like of the SSB expected by the terminal, at least one of the periodicity, the quantity of transmissions, the sending duration, the sending direction, or the like of the SSB indicated by the network device can satisfy the expectation of the terminal.

For example, the first periodicity of the SSB corresponding to the first secondary cell in the first information may be associated with the second periodicity of the SSB corresponding to the first secondary cell in the second information. For example, a length of the first periodicity is less than or equal to a length of the second periodicity.

For example, the information about the first quantity of transmissions of the SSB corresponding to the first secondary cell in the first information may be associated with the information about the second quantity of transmissions of the SSB corresponding to the first secondary cell in the second information. For example, a transmission duration of the SSB in each first periodicity indicated by the information about the first quantity of transmissions is less than or equal to a transmission duration of the SSB in a corresponding second periodicity indicated by the information about the second quantity of transmissions; and/or a total transmission duration of SSBs in a plurality of first periodicities indicated by the information about the first quantity of transmissions is less than or equal to a total transmission duration of the SSBs in a plurality of second periodicities indicated by the information about the second quantity of transmissions.

For example, the information about the first transmission duration of the SSB corresponding to the first secondary cell in the first information may be associated with the information about the second transmission duration of the SSB corresponding to the first secondary cell in the second information. For example, a transmission duration of the SSB in each first periodicity indicated by the information about the first transmission duration is less than or equal to a transmission duration of the SSB in a corresponding second periodicity indicated by the information about the second sending duration; and/or a total transmission duration of SSBs in a plurality of first periodicities indicated by the information about the first transmission duration is less than or equal to a total transmission duration of the SSBs in a plurality of second periodicities indicated by the information about the second sending duration.

For example, the first sending direction of the SSB corresponding to the first secondary cell in the first information may be associated with the second sending direction of the SSB corresponding to the first secondary cell in the second information. For example, the first sending direction and the second sending direction are a same direction. Alternatively, there is an offset angle between a pointing angle of the first sending direction and a pointing angle of the second sending direction. The offset angle may be greater than or equal to 0 degrees. This is not limited herein.

2. If the network device does not obtain the second information from the terminal, the network device may actively send the first information to the terminal. For example, when or after indicating to activate the first secondary cell, the network device may send the first information to the terminal. There may be the following manners for "the network device indicates to activate the first secondary cell". Specifically:
(1) The first information may further indicate to activate the first secondary cell. The following uses an example in which the first information is carried in a DL MAC CE to describe a process in which the first information indicates to activate the first secondary cell. Specifically:
   For a frame structure of the DL MAC CE, refer to FIG. 6. FIG. 6 is a one-byte DL MAC CE, and Ci indicates to activate or deactivate a secondary cell whose secondary cell index (sCellIndex) is i, where i may be, for example, an integer greater than or equal to 1 and less than or equal to 7. For example, Ci being set to 0 indicates to deactivate a secondary cell whose secondary cell index is i, and Ci being set to 1 indicates to activate the secondary cell whose secondary cell index is i; and vice versa. That is, assuming that an index of the first secondary cell is 1 (that is, i is 1), when C1 is set to 1, it indicates to activate the first secondary cell, and when C1 is set to 0, it indicates to deactivate the first secondary cell; and vice versa.

R in FIG. 6 is a reserved bit.

In this manner, it may be understood as that a configuration delivered by the network device to the terminal does not activate the first secondary cell. Therefore, the network device may activate the first secondary cell by using the first information. That is, before step 501, the network device sends first configuration information to the terminal. The first configuration information indicates that the first secondary cell is in a deactivated state. In this case, the first information may indicate to activate the first secondary cell.

The first configuration information may be carried in, for example, a DL MAC CE, DCI, or an RRC message. When the first configuration information in the DL MAC CE indicates that the first secondary cell is in the deactivated state, for a frame structure of the DL MAC CE, refer to FIG. 6. Details are not described herein again.

(2) The network device sends second configuration information to the terminal, where the second configuration information indicates that the first secondary cell is in an active state. Optionally, a process in which the network device sends the second configuration information to the terminal may be performed before step 501.

The second configuration information may be carried in, for example, a DL MAC CE, DCI, or an RRC message. When the second configuration information in the DL MAC CE indicates that the first secondary cell is in the active state, for a frame structure of the DL MAC CE, refer to FIG. 6. Details are not described herein again.

In a possible implementation, for the foregoing manner 1, for a process in which the network device activates the first secondary cell, refer to the foregoing manner (1) or manner (2). Details are not described herein again. Optionally, the configuration information of the WUS may be carried in the first configuration information or the second configuration information. This is not limited herein.

Optionally, in manner 1 or manner 2, the network device may send the first information to the terminal before a first time point. The first time point is a start time point of sending the SSB in the first secondary cell. Optionally, the network device may determine the first time point based on a data transmission status between the network device and the terminal. For example, if the network device and the terminal perform high-rate service transmission, the first time point is relatively early. In contrast, the first time point is relatively late.

After the network device sends the first information to the terminal, the terminal may receive the SSB in the first secondary cell based on the first information.

For example, when receiving the first information, the terminal receives the SSB in the first secondary cell based on the first information.

For example, after receiving the first information, the terminal receives the SSB in the first secondary cell based on the first information. In other words, the terminal receives the SSB in the first secondary cell based on a start time unit of the first periodicity of the SSB in the first information. For example, the terminal receives the SSB in the first secondary cell in the start time unit, a next time unit of the start time unit, or a system frame to which the start time unit belongs.

Further, the terminal may further receive, in the first secondary cell, the SSB on an SSB resource of the first secondary cell based on the first information. The SSB resource of the first secondary cell may be carried in the first configuration information or the second configuration information. For the SSB resource herein, refer to the foregoing relevant descriptions. Details are not described herein again.

The following describes in detail that the terminal receives the SSB in the first secondary cell based on the first information. Specifically:
1. When the first information includes the first periodicity (or the index of the first periodicity) of the SSB corresponding to the first secondary cell, the information about the first quantity of transmissions of the SSB, the information about the first transmission duration of the SSB, and the first sending direction of the SSB, the terminal receives the SSB in the first secondary cell based on the first periodicity, the information about the first quantity of transmissions, the information about the first sending duration, and the first sending direction. Correspondingly, the network device sends the SSB in the first secondary cell based on the first periodicity, the information about the first quantity of transmissions, the information about the first sending duration, and the first sending direction.
2. When the first information includes the information about the first quantity of transmissions of the SSB corresponding to the first secondary cell, the information about the first transmission duration of the SSB, and the first sending direction of the SSB, the terminal receives the SSB in the first secondary cell based on a third periodicity, the information about the first quantity of transmissions, the information about the first sending duration, and the first sending direction of the SSB. Correspondingly, the network device sends the SSB in the first secondary cell based on the third periodicity, the information about the first quantity of transmissions, the information about the first sending duration, and the first sending direction of the SSB.

The third periodicity is different in length from the first periodicity of the SSB. For example, the length of the third periodicity is greater than the length of the first periodicity.

In a possible implementation, the third periodicity (or an index of the third periodicity) may be carried in the first configuration information or the second configuration information. This is not limited herein. For example, the third periodicity may be indicated by using an ssb-periodicityServingCell information element corresponding to the first secondary cell in the first configuration information or the second configuration information. Optionally, for manner 2 (that is, the network device may actively send the first information to the terminal), the third periodicity may be associated with a fourth periodicity of the SSB corresponding to the first secondary cell. For example, the length of the third periodicity may be less than or equal to a length of the fourth periodicity. The fourth periodicity or an index of the fourth periodicity may be indicated by the terminal to the network device. For example, the terminal sends assistance information to the network device, so that the network device determines the third periodicity based on the assistance information. The assistance information includes the fourth periodicity or the index of the fourth periodicity. For example, the assistance information may be carried in UCI, a UL MAC CE, an RRC message, or the like. This is not limited in this application.

In a possible implementation, the first configuration information or the second configuration information may further indicate whether the SSB is to be sent in the first secondary cell.

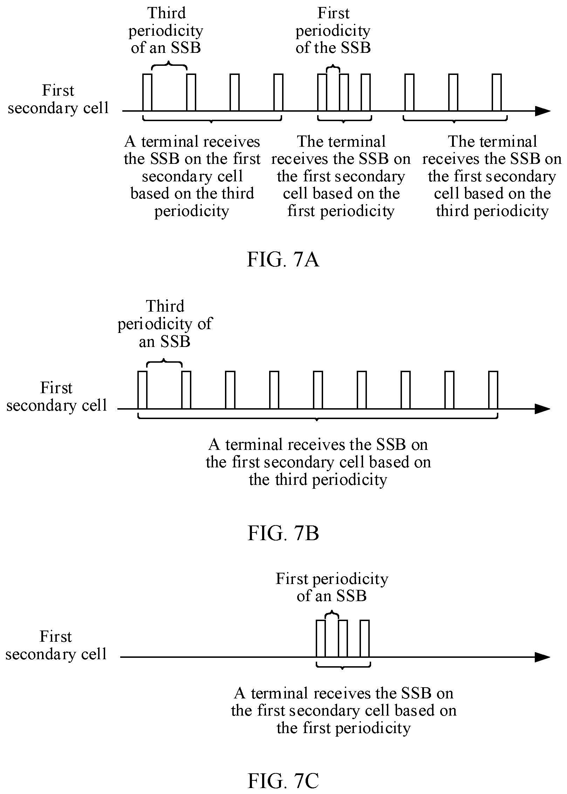

For example, when the first configuration information or the second configuration information indicates that the SSB is to be sent in the first secondary cell, the terminal may receive the SSB in the first secondary cell based on the third periodicity. That is, the terminal first receives the SSB in the first secondary cell based on the third periodicity. After receiving the first information, if the first information includes the first periodicity (or the index of the first periodicity) of the SSB, the terminal may receive the SSB in the first secondary cell based on the first periodicity. For example, refer to FIG. 7A. If the first information does not include the first periodicity (or the index of the first periodicity) of the SSB, the terminal may receive the SSB in the first secondary cell based on the third periodicity. For example, refer to FIG. 7B.

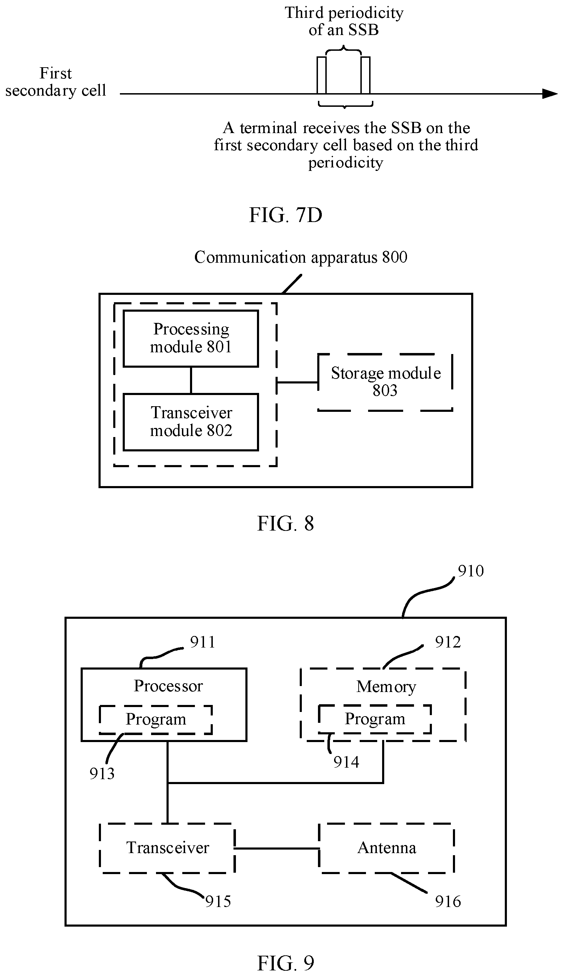

For example, when the first configuration information or the second configuration information indicates that the SSB is not to be sent in the first secondary cell, the terminal may not receive the SSB in the first secondary cell. Further, after receiving the first information, if the first information includes the first periodicity (or the index of the first periodicity) of the SSB, the terminal may receive the SSB in the first secondary cell based on the first periodicity. For example, refer to FIG. 7C. If the first information does not include the first periodicity (or the index of the first periodicity) of the SSB, the terminal may receive the SSB in the first secondary cell based on the third periodicity. For example, refer to in FIG. 7D.

3. When the first information includes the first periodicity (or the index of the first periodicity) of the SSB corresponding to the first secondary cell and the first sending direction of the SSB, the terminal receives the SSB in the first secondary cell based on the first periodicity and the first sending direction. Correspondingly, the network device sends the SSB in the first secondary cell based on the first periodicity and the first sending direction.

4. When the first information includes the first sending direction of the SSB corresponding to the first secondary cell, the terminal receives the SSB in the first secondary cell based on the third periodicity and the first sending direction. Correspondingly, the network device sends the SSB in the first secondary cell based on the third periodicity and the first sending direction.

5. The network device does not indicate the periodicity, the quantity of transmissions, the sending duration, and the sending direction of the SSB to the terminal. In other words, the first information does not include the first periodicity (or the index of the first periodicity) of the SSB corresponding to the first secondary cell, the information about the first quantity of transmissions of the SSB, the information about the first transmission duration of the SSB, and the first sending direction of the SSB. In this case, the terminal receives the SSB in the first secondary cell based on the third periodicity. Correspondingly, the network device sends the SSB in the first secondary cell based on the third periodicity.

It should be noted that the foregoing is some examples of "how the terminal receives the SSB in the first secondary cell and how the network device sends the SSB in the first secondary cell", and there is another combination manner. This is not limited in this application.

After the terminal receives the SSB in the first secondary cell based on the first information, the terminal may perform one or more of synchronization, L1 measurement, L3 measurement, activation of the first secondary cell, RLM, BFD, or the like based on the SSB. It should be understood that, when the first secondary cell is activated, the terminal may perform one or more of L1 measurement, L3 measurement, RLM, BFD, or the like based on the SSB. When the first secondary cell is not activated, the terminal may activate the first secondary cell after performing synchronization based on the SSB.

Optionally, when or after completing synchronization based on the SSB, the terminal may further send indication information to the network device, where the indication information indicates that the terminal completes synchronization. In this way, when receiving the indication information, the network device may send third information (where the third information indicates that the SSB is not broadcast in the first secondary cell) to the terminal based on the indication information, so that the terminal stops receiving the SSB in the first secondary cell based on the third information. Alternatively, the network device sends fourth information (where the fourth information indicates the terminal to receive the SSB in the first secondary cell based on the third periodicity of the SSB) to the terminal based on the indication information, so that the terminal receives the SSB in the first secondary cell based on the third periodicity.

For example, for FIG. 7C or FIG. 7D, the network device may send the third information to the terminal based on the indication information. For FIG. 7A or FIG. 7B, the network device may send the fourth information to the terminal based on the indication information.

The indication information may be carried in a UL MAC CE, UCI, an RRC message, or the like. That the third information indicates that the SSB is not broadcast in the first secondary cell may be understood as: The third information indicates to stop at least one of SSB-based synchronization, SSB-based L1 measurement, SSB-based L3 measurement, SSB-based RLM, SSB-based BFD, or the like in the first secondary cell. This is not limited in this application.

Optionally, the third information or the fourth information may be carried in a DL MAC CE, DCI, an RRC message, or the like. In an example, the third information or the fourth information may further indicate to deactivate the first secondary cell. When the third information or the fourth information in the DL MAC CE indicates to deactivate the first secondary cell, for a frame structure of the DL MAC CE, refer to FIG. 6. Details are not described herein again.

Optionally, after performing L1 measurement or L3 measurement based on the SSB, the terminal may obtain a corresponding measurement result. The measurement result may be, for example, one or more of reference signal received power (reference signal received power, RSRP), reference signal received quality (reference signal received quality, RSRQ), a received signal strength indicator (received signal strength indicator, RSSI), and a signal to interference plus noise ratio (signal to interference plus noise ratio, SINR).

In a possible implementation, the terminal may further send the measurement result to the network device, so that the network device sends the third information (where the third information indicates that the SSB is not broadcast in the first secondary cell) to the terminal based on the measurement result, so that the terminal stops receiving the SSB in the first secondary cell based on the third information. Alternatively, the network device sends the fourth information (where the fourth information indicates the terminal to receive the SSB in the first secondary cell based on the third periodicity of the SSB) to the terminal based on the measurement result, so that the terminal receives the SSB in the first secondary cell based on the third periodicity.

For example, for FIG. 7C or FIG. 7D, the network device may send the third information to the terminal based on the measurement result. For FIG. 7A or FIG. 7B, the network device may send the fourth information to the terminal based on the measurement result.

In another possible implementation, the network device may send the third information or the fourth information to the terminal independent of the measurement result. For example, the network device may send the third information to the terminal based on the information about the first quantity of transmissions of the SSB corresponding to the first secondary cell and/or the information about the first transmission duration of the SSB. For example, the information about the first quantity of transmissions of the SSB is a quantity of transmissions of the SSB in the first periodicity of the SSB, the information about the first transmission duration of the SSB is a transmission duration of the SSB in the first periodicity of the SSB. The network device sends the third information to the terminal when the quantity of transmissions and/or the transmission duration is reached. Alternatively, the network device may send the fourth information to the terminal based on the information about the first quantity of transmissions of the SSB corresponding to the first secondary cell and/or the information about the first transmission duration of the SSB. For example, the information about the first quantity of transmissions of the SSB is a quantity of transmissions of the SSB in the first periodicity of the SSB, the information about the first transmission duration of the SSB is a transmission duration of the SSB in the first periodicity of the SSB. The network device sends the fourth information to the terminal when the quantity of transmissions and/or the transmission duration is reached. It should be understood that, in this case, the network device may not indicate the quantity of transmissions and/or the transmission duration to the terminal, that is, the first information may not include the information about the first quantity of transmissions of the SSB corresponding to the first secondary cell and/or the information about the first transmission duration of the SSB.

It should be understood that the technical solutions in this embodiment of this application may be applied to a CA technology or a DC technology. Specifically:

In a first case, when a primary cell and a secondary cell in the CA technology are co-sited, or when a master network device and a secondary network device are co-sited in the DC technology, the master network device and the secondary network device may not be distinguished. That is, all actions on a network side in this solution are performed by one site, that is, performed by one network device.

In a second case, when a primary cell and a secondary cell in the CA technology are non-co-sited, or when a master network device and a secondary network device in the DC technology are non-co-sited, actions on a network side in this solution are performed by two sites, for example, performed by the master network device and the secondary network device. The following uses a master network device and a secondary network device as an example to describe the technical solutions of this application. The technical solutions may specifically include step S1 to step S3.

Step S1. The master network device sends first information to a terminal, where the first information indicates the terminal to receive an SSB in a first secondary cell, and the first secondary cell is a secondary cell configured by the network device for the terminal.

Correspondingly, the terminal receives the first information from the master network device.

Step S1 is similar to step 501 in FIG. 5, that is, the network device in step 501 in FIG. 5 may be used as the master network device.

Step S2. The master network device sends fifth information to the secondary network device, where the fifth information indicates the secondary network device to send the SSB in the first secondary cell.

Correspondingly, the secondary network device receives the fifth information from the master network device. In a possible implementation, the secondary network device may further return, to the master network device, an acknowledgment message indicating that the fifth information has been successfully received.

Optionally, the master network device may further indicate, to the secondary network device, at least one of a periodicity, a quantity of transmissions, sending duration, a sending direction, or the like of the SSB corresponding to the first secondary cell. In other words, the fifth information further includes at least one of the following: a first periodicity (or an index of the first periodicity) of the SSB corresponding to the first secondary cell, information about a first quantity of transmissions of the SSB, information about a first transmission duration of the SSB, and a first sending direction of the SSB. For example, the fifth information may be carried in an Xn message or another message. This is not limited herein.

In a possible implementation, step S1 may be performed before or after step S2, or may be performed at the same time with step S2. This is not limited herein.

Step S3. The secondary network device sends the SSB in the first secondary cell based on the fifth information.

Correspondingly, the terminal receives the SSB in the first secondary cell based on the fifth information.

It should be noted that, for actions performed by the master network device in step S1 to step S3, refer to a process other than "the network device sends the SSB in the first secondary cell" in the embodiment in FIG. 5. For actions performed by the secondary network device in step S1 to step S3, refer to a process "the network device sends the SSB in the first secondary cell" in the embodiment in FIG. 5. Specific content is not described herein again.

In addition, processing performed by a single execution entity (the terminal device or the network device (the master network device, the secondary network device, or the like)) shown in embodiments of this application may alternatively be divided to be performed by a plurality of execution entities. These execution entities may be logically and/or physically separated. For example, processing performed by the network device (the master network device, the secondary network device, or the like) may be divided to be performed by at least one of a CU, a DU, an RU, and a RIC (such as a near-real-time RIC or a non-real-time RIC).

With reference to the foregoing first case, an example in which the processing performed by the network device is divided to be performed by at least one of the CU, the DU, the RU, and the RIC (for example, the near-real-time RIC or the non-real-time RIC) is used below for description.

For example, that the network device sends the first information to the terminal in step 501 may be understood as: a CU or a DU in the network device sends the first information to the terminal.

In an example, the CU may obtain, for example, the second information, and determine the first information based on the second information. Therefore, the CU may send the first information to the terminal. For example, the periodicity of the SSB is used as an example. The CU may determine the first periodicity of the SSB based on the second periodicity (or the index of the second periodicity) of the SSB corresponding to the first secondary cell in the second information. In this case, the first information may be carried in an RRC message.

That the CU obtains the second information may include: The CU receives the second information from the terminal, for example, the CU receives an RRC message from the terminal, where the RRC message includes the second information; or the CU receives the second information from the terminal via the DU, for example, the CU obtains the second information from the DU, and the DU receives a UL MAC CE or UCI from the terminal, where the UL MAC CE or the UCI includes the second information.

In another example, the DU may obtain, for example, the second information, and determine the first information based on the second information. Therefore, the DU may send the first information to the terminal. For example, the periodicity of the SSB is used as an example. The DU may determine the first periodicity of the SSB based on the second periodicity (or the index of the second periodicity) of the SSB corresponding to the first secondary cell in the second information. In this case, the first information may be carried in a DL MAC CE or DCI.

That the DU obtains the second information may include: The DU receives the second information from the terminal, for example, the DU receives a UL MAC CE or UCI from the terminal, where the UL MAC CE or the UCI includes the second information; or the DU receives the second information from the terminal via the CU, for example, the DU obtains the second information from the CU, and the CU receives an RRC message from the terminal, where the RRC message includes the second information.

Optionally, for other content in the first information, refer to the "process of determining the first periodicity of the SSB" in the foregoing example. Details are not described herein again. When the first sending direction of the SSB corresponding to the first secondary cell in the first information is associated with the coverage area in which the terminal is located, it may be understood that, a RIC in the network device determines, based on the coverage area in which the terminal is located, a third sending direction of the SSB corresponding to the first secondary cell, and indicates the third sending direction to the CU. When the CU determines the first sending direction, the CU may determine the first sending direction based on the second sending direction of the SSB corresponding to the first secondary cell in the second information and the third sending direction. When the DU determines the first sending direction, the CU may indicate the third sending direction to the DU, so that the DU determines the first sending direction based on the second sending direction and the third sending direction. Optionally, the CU may further return, to the RIC, an acknowledgment message indicating that the third sending direction has been successfully received.

It should be noted that the foregoing is merely some examples of "determining each piece of content in the first information". In some possible manners, some content in the first information may be determined by the CU, and the other content may be determined by the DU. Which unit determines which content in the first information is not limited in this application.

Optionally, the DU may further obtain, from the CU, information used to request to activate the first secondary cell. For example, when the first information indicates to activate the first secondary cell or the second configuration information indicates that the first secondary cell is in an active state, the DU may obtain, from the CU, the information used to request to activate the first secondary cell. Optionally, the DU may further learn about at least one of an SSB resource of the first secondary cell, the third periodicity of the SSB, and the like in the second configuration information. In this way, the DU may send the second configuration information to the terminal.

For example, that the network device determines the first time point based on the data transmission status between the network device and the terminal may be understood as: The RIC in the network device determines the first time point based on the data transmission status between the network device and the terminal. Optionally, the RIC may further indicate the first time point to the CU in the network device, so that the CU sends the first information to the terminal before the first time point. In a possible implementation, the CU may further return, to the RIC, an acknowledgment message indicating that the first time point has been successfully received.

Optionally, the RIC may indicate both the first time point and the third sending direction to the CU. In this case, the CU may return, to the RIC, an acknowledgment message indicating that the first time point and the third sending direction have been successfully received.

With reference to the foregoing second case, an example in which processing performed by the master network device and the secondary network device is divided to be performed by at least one of a CU, a DU, an RU, and a RIC (for example, a near-real-time RIC or a non-real-time RIC) is used for description below.

For example, that the master network device sends the fifth information to the secondary network device may be understood as: A CU in the master network device sends the fifth information to a CU in the secondary network device.

It should be noted that names of messages between network elements, names of parameters in the messages, and the like in the foregoing embodiments are merely examples, and there may be other names in a specific implementation. This is not specifically limited in embodiments of this application.

In addition, embodiments of this application are described only by using an example in which all steps included in embodiments are performed, and this should not be considered as a specific limitation on this application. In other words, the steps included in embodiments of this application (the embodiment shown in FIG. 5) may be partially or completely performed when there is no logical conflict.

It is to be understood that, to implement the foregoing functions, the device includes corresponding hardware structures and/or software modules for performing the functions. A person skilled in the art should easily be aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the terminal or the network device (the master network device, the secondary network device, or the like) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 8 is a diagram of a structure of a communication apparatus according to an embodiment of this application. The communication apparatus 800 may be used in the method shown in the embodiment in FIG. 5. As shown in FIG. 8, the communication apparatus 800 includes a processing module 801 and a transceiver module 802. The processing module 801 may be one or more processors, and the transceiver module 802 may be a transceiver or a communication interface. The communication apparatus may be configured to implement a function of a terminal or a network device (a master network device, a secondary network device, or the like) in any one of the foregoing method embodiments, or configured to implement a function of a network element in any one of the foregoing method embodiments. The network element or network function may be a network element in a hardware device, a software function running on dedicated hardware, or a virtualized function instantiated on a platform (for example, a cloud platform). Optionally, the communication apparatus 800 may further include a storage module 803, configured to store program code and data that are of the communication apparatus 800.

In an embodiment, when the communication apparatus is used as a terminal or a chip used in the terminal, the communication apparatus performs the steps performed by the terminal in the foregoing method embodiments. The transceiver module 802 is configured to specifically perform a sending action and/or receiving action performed by the terminal in the embodiment shown in FIG. 5, for example, support the terminal in performing another process of the technology described in this specification. The processing module 801 may be configured to support the communication apparatus 800 in performing a processing action in the foregoing method embodiments, for example, support the terminal in performing another process of the technology described in this specification.

For example, the transceiver module 802 is configured to: receive first information from the network device; and receive an SSB in a first secondary cell based on the first information. The first information indicates the terminal to receive the SSB in the first secondary cell, and the first secondary cell is a secondary cell configured by the network device for the terminal.

In a possible implementation, the transceiver module 802 is further configured to send second information to the network device, where the second information is used to request sending of the SSB in the first secondary cell. The second information includes information about a second quantity of transmissions or information about a second transmission duration of the SSB; or the second information includes a cause value for the terminal to request sending of the SSB in the first secondary cell, where the cause value is used to determine the information about the second quantity of transmissions or the information about the second sending duration.

In a possible implementation, the transceiver module 802 is further configured to: receive third information from the network device; and stop receiving the SSB in the first secondary cell based on the third information. The third information indicates that the SSB is not broadcast in the first secondary cell.

In a possible implementation, the transceiver module 802 is further configured to: receive fourth information from the network device; and receive the SSB in the first secondary cell based on a third periodicity. The fourth information indicates the terminal to receive the SSB in the first secondary cell based on the third periodicity of the SSB, and the third periodicity is different in length from a first periodicity of the SSB.

In an embodiment, when the communication apparatus is used as a network device (a master network device, a secondary network device, or the like) or a chip used in the network device (the master network device, the secondary network device, or the like), the communication apparatus performs the steps performed by the network device (the master network device, the secondary network device, or the like) in the foregoing method embodiments. The transceiver module 802 is configured to specifically perform a sending and/or receiving action performed by the network device (the master network device, the secondary network device, or the like) in the embodiment shown in FIG. 5, for example, support the network device (the master network device, the secondary network device, or the like) in performing another process of the technology described in this specification. The processing module 801 may be configured to support the communication apparatus 800 in performing a processing action in the foregoing method embodiments, for example, support the network device (the master network device, the secondary network device, or the like) in performing another process of the technology described in this specification.

For example, the transceiver module 802 is configured to: send the first information to the terminal; and send the SSB in the first secondary cell. The first information indicates the terminal to receive the synchronization signal block SSB in the first secondary cell, and the first secondary cell is a secondary cell configured by the network device for the terminal.

In a possible implementation, the transceiver module 802 is further configured to receive second information from the terminal, where the second information is used to request sending of the SSB in the first secondary cell. The second information includes information about a second quantity of transmissions or information about a second transmission duration of the SSB; or the second information includes a cause value for the terminal to request sending of the SSB in the first secondary cell, where the cause value is used to determine the information about the second quantity of transmissions or the information about the second sending duration.

In a possible implementation, when sending the first information to the terminal, the transceiver module 802 is configured to send the first information to the terminal before a first time point. The first time point is a start time point for sending the SSB in the first secondary cell.

In a possible implementation, the transceiver module 802 is further configured to send third information to the terminal, where the third information indicates that the SSB is not broadcast in the first secondary cell.

In a possible implementation, the transceiver module 802 is further configured to send fourth information to the terminal, where the fourth information indicates the terminal to receive the SSB in the first secondary cell based on a third periodicity of the SSB, and the third periodicity is different in length from the first periodicity of the SSB.

In a possible implementation, when the terminal or the network device (the master network device, the secondary network device, or the like) is a chip, the transceiver module 802 may be a communication interface, a pin, a circuit, or the like. The communication interface may be configured to input data to be processed to a processor, and may output a processing result of the processor to the outside. During specific implementation, the communication interface may be a general-purpose input/output (general purpose input/output, GPIO) interface, and may be connected to a plurality of peripheral devices (for example, a liquid crystal display (LCD), a camera (camera), a radio frequency (radio frequency, RF) module, and an antenna). The communication interface is connected to the processor through a bus.

The processing module 801 may be a processor. The processor may execute computer-executable instructions stored in the storage module, so that the chip performs the method in the embodiment shown in FIG. 5. Further, the processor may include a controller, an arithmetic logic unit, and a register. For example, the controller is mainly responsible for instruction decoding, and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving register operands, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS), an advanced reduced instruction set computing machines (advanced RISC machines, ARM) architecture, a second processor (network processor, NP) architecture, or the like. The processor may be a single-core or multi-core processor. The storage module may be a storage module inside the chip, for example, a register or a cache. Alternatively, the storage module may be a storage module located outside the chip, for example, a read-only memory (read-only memory, ROM), another type of static storage device that can store static information and instructions, or a random access memory (random access memory, RAM).

It should be noted that a function corresponding to each of the processor and the interface may be implemented by a hardware design, may be implemented by a software design, or may be implemented by a combination of software and hardware. This is not limited herein.

FIG. 9 is a diagram of a structure of another communication apparatus according to an embodiment of this application. It may be understood that the communication apparatus 910 includes means in necessary forms, such as modules, units, elements, circuits, or interfaces, which are appropriately configured together to execute the solution. The communication apparatus 910 may be the foregoing terminal or network device (the master network device, the secondary network device, or the like), or may be a component (for example, a chip) in these devices, to implement the method described in the foregoing method embodiments. The communication apparatus 910 includes one or more processors 911. The processor 911 may be a general-purpose processor, a special-purpose processor, or the like. For example, the processor may be a baseband processor or a central processing unit. The baseband processor may be configured to process a communication protocol and communication data. The central processing unit may be configured to: control the communication apparatus (for example, the terminal, the network device (the master network device, the secondary network device, or the like), or a chip); execute a software program; and process data of the software program.

Optionally, in a design, the processor 911 may include a program 913 (also referred to as code or instructions sometimes), and the program 913 may be run on the processor 911, to cause the communication apparatus 910 to perform the method described in the foregoing embodiments. In another possible design, the communication apparatus 910 includes a circuit (not shown in FIG. 9). The circuit is configured to implement functions such as the terminal and the network device in the foregoing embodiments. Optionally, the communication apparatus 910 may include one or more memories 912, and a program 914 (which sometimes may also be referred to as code or instructions) is stored in the memory 912. The program 914 may be run on the processor 911, to cause the communication apparatus 910 to perform the method described in the foregoing method embodiments.

Optionally, the processor 911 and/or the memory 912 may further store data. The processor and the memory may be separately disposed, or may be integrated together.

Optionally, the communication apparatus 910 may further include a transceiver 915 and/or an antenna 916. The processor 911 may also be sometimes referred to as a processing unit, and control the communication apparatus (for example, the terminal or the network device (the master network device, the secondary network device, or the like)). The transceiver 915 may also be sometimes referred to as a transceiver unit, a transceiver machine, a transceiver circuit, or the like, and is configured to implement a transceiver function of the communication apparatus through the antenna 916.

An embodiment of this application further provides a communication apparatus. The communication apparatus includes at least one processor. The at least one processor is configured to perform the method according to any one of the embodiments in FIG. 5.

An embodiment of this application further provides a computer-readable storage medium. The computer-readable storage medium stores computer instructions. When the computer instructions are executed, a computer is caused to perform the method according to any one of the embodiments in FIG. 5.

An embodiment of this application further provides a computer program product. The computer program product includes computer program code. When the computer program code is run by a computer, the computer is caused to perform the method according to any one of the embodiments in FIG. 5.

An embodiment of this application further provides a chip. The chip includes at least one processor and an interface. The processor is configured to read and execute instructions stored in a memory. When the instructions are run, the chip is caused to perform the method according to any one of the embodiments in FIG. 5.

The foregoing units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments of this application. In addition, various network element units in embodiments of this application may be integrated into one processing unit, each of the units may exist alone physically, or two or more units may be integrated into one unit. The integrated unit may be implemented either in the form of hardware, or in the form of software network element unit.

When the integrated unit is implemented in the form of the software network element unit and sold or used as an independent product, the integrated unit may be stored in a computer-readable storage medium. Based on such an understanding, a part making contribution in the technical solutions of this application or all or a part of the technical solutions may be embodied in the form of a software product. The computer software product is stored in a storage medium, and includes several instructions for causing a computer device (which may be a personal computer, a terminal, a cloud server, a network device, or the like) to perform all or a part of steps of the foregoing methods in embodiments of this application. The foregoing storage medium includes any medium that can store program code, such as a USB flash drive, a removable hard disk drive, a ROM, a RAM, a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a network device, wherein the first information indicates a terminal to receive a synchronization signal block SSB in a first secondary cell, and the first secondary cell is a secondary cell configured by the network device for the terminal; and
receiving the SSB in the first secondary cell based on the first information.

2. The method according to claim 1, wherein the first information comprises information about a first quantity of transmissions or information about a first transmission duration of the SSB.

3. The method according to claim 1 or 2, wherein the method further comprises:
sending second information to the network device, wherein the second information is used to request sending of the SSB in the first secondary cell, wherein
the second information comprises information about a second quantity of transmissions or information about a second transmission duration of the SSB; or
the second information comprises a cause value for the terminal to request sending of the SSB in the first secondary cell, wherein the cause value is used to determine the information about the second quantity of transmissions or the information about the second transmission duration.

4. The method according to claim 3, wherein
the second information further comprises a second periodicity of the SSB or an index of the second periodicity;
the second information is associated with the second periodicity or the index of the second periodicity; or
the cause value is further used to determine the second periodicity.

5. The method according to claim 3 or 4, wherein the cause value indicates one or more of synchronization, layer 1 measurement, layer 3 measurement, activation of the first secondary cell, radio link monitoring, or beam failure detection.

6. The method according to any one of claims 1 to 5, wherein the first information further comprises a first periodicity of the SSB, and the first periodicity is associated with the second periodicity of the SSB.

7. The method according to any one of claims 1 to 6, wherein the method further comprises:
receiving third information from the network device, wherein the third information indicates that the SSB is not broadcast in the first secondary cell; and
stopping receiving the SSB in the first secondary cell based on the third information.

8. The method according to any one of claims 1 to 6, wherein the method further comprises:
receiving fourth information from the network device, wherein the fourth information indicates the terminal to receive the SSB in the first secondary cell based on a third periodicity of the SSB, and the third periodicity is different in length from the first periodicity of the SSB; and
receiving the SSB in the first secondary cell based on the third periodicity.

9. A communication method, comprising:
sending first information to a terminal, wherein the first information indicates the terminal to receive a synchronization signal block SSB in a first secondary cell, and the first secondary cell is a secondary cell configured by a network device for the terminal; and
sending the SSB in the first secondary cell.

10. The method according to claim 9, wherein the first information comprises information about a first quantity of transmissions or information about a first transmission duration of the SSB.

11. The method according to claim 9 or 10, wherein the method further comprises:
receiving second information from the terminal, wherein the second information is used to request sending of the SSB in the first secondary cell, wherein
the second information comprises information about a second quantity of transmissions or information about a second transmission duration of the SSB; or
the second information comprises a cause value for the terminal to request sending of the SSB in the first secondary cell, wherein the cause value is used to determine the information about the second quantity of transmissions or the information about the second sending duration.

12. The method according to claim 11, wherein
the second information further comprises a second periodicity of the SSB or an index of the second periodicity;
the second information is associated with the second periodicity or the index of the second periodicity; or
the cause value is further used to determine the second periodicity.

13. The method according to claim 11 or 12, wherein the cause value indicates one or more of synchronization, layer 1 measurement, layer 3 measurement, activation of the first secondary cell, radio link monitoring, or beam failure detection.

14. The method according to any one of claims 9 to 13, wherein the first information further comprises a first periodicity of the SSB, and the first periodicity is associated with the second periodicity of the SSB.

15. The method according to any one of claims 9 to 14, wherein the sending the first information to the terminal comprises:
sending the first information to the terminal before a first time point, wherein
the first time point is a start time point of sending the SSB in the first secondary cell.

16. The method according to any one of claims 1 to 15, wherein the method further comprises:
sending third information to the terminal, wherein the third information indicates that the SSB is not broadcast in the first secondary cell.

17. The method according to any one of claims 1 to 15, wherein the method further comprises:
sending fourth information to the terminal, wherein the fourth information indicates the terminal to receive the SSB in the first secondary cell based on a third periodicity of the SSB, and the third periodicity is different in length from the first periodicity of the SSB.

18. A communication apparatus, comprising a unit or a module configured to perform the method according to any one of claims 1 to 8, or a unit or a module configured to perform the method according to any one of claims 9 to 17.

19. A communication apparatus, wherein the communication apparatus comprises at least one processor, and the at least one processor is configured to perform the method according to any one of claims 1 to 8, or the at least one processor is configured to perform the method according to any one of claims 9 to 17.

20. A computer-readable storage medium, wherein the computer-readable storage medium stores computer instructions, and when the computer instructions are executed, a computer is caused to perform the method according to any one of claims 1 to 8, or the computer is caused to perform the method according to any one of claims 9 to 17.

21. A communication system, wherein the communication system comprises a terminal and a network device;
the terminal is configured to perform the method according to any one of claims 1 to 8; and
the network device is configured to perform the method according to any one of claims 9 to 17.

22. A computer program product, wherein the computer program product comprises computer program code, and when the computer program code is run by a computer, the computer is caused to perform the method according to any one of claims 1 to 8, or the computer is caused to perform the method according to any one of claims 9 to 17.

23. A chip, wherein the chip comprises at least one processor and an interface, the processor is configured to read and execute instructions stored in a memory, and when the instructions are run, the chip is caused to perform the method according to any one of claims 1 to 8, or the chip is caused to perform the method according to any one of claims 9 to 17.
